# EUROPEAN PATENT SPECIFICATION

(11) **EP 2 803 170 B1**
(45) Date of publication and mention of the grant of the patent: **06.03.2019**
(21) Application number: 12700770.6
(22) Date of filing: 12.01.2012
(51) Int. Cl.: H04L 12/58

(54) **METHOD AND SYSTEM FOR DELIVERING MAIL TO A RECIPIENT**
VERFAHREN UND SYSTEM ZUR LIEFERUNG EINER POSTSENDUNG AN EINEN EMPFÄNGER
PROCÉDÉ ET SYSTÈME POUR LA LIVRAISON DE COURRIER À UN DESTINATAIRE

(43) Date of publication of application: 19.11.2014
(60) Divisional application: 18182971.4
(73) Proprietor: Die Schweizerische Post AG, 3030 Bern (CH)
(72) Inventor: STRÖLIN, Benoit, CH-8264 Eschenz (CH)
(74) Representative: Keller & Partner Patentanwälte AG
(86) International application number: PCT/CH2012/000006
(87) International publication number: WO 2013/104076

(56) References cited:
- WO-A2-01/13576
- US-A- 5 689 642
- US-A1- 2010 161 739

## Description

### Technical Field

The invention relates to a method and system for delivering mail to a recipient.

### Background Art

Traditionally, mail is delivered to a recipient in physical form by service providers such as postal services or couriers. During the last two decades, delivery in electronic form has gained more and more importance as it is faster and usually less expensive.

Usually, the method of delivery (i, e, physical or electronic) is determined by the sender, such as by posting a physical mailpiece with a post office or sending an e-mail message. However, several methods or systems for converting physical to electronic mail (or vice versa) as well as for assigning e-mail adresses to postal addresses are known.

As an example, US patent No. 7,693,942 (David S. Nale) relates to a system and a method for processing mail which includes receiving a mail item, the mail item having recipient address information and one or more pages enclosed in the mail item, and scanning the mail item including the recipient address information and the enclosed one or more pages into an image file. A subscriber is identified from the recipient address information in the image file. An e-mail message is transmitted to the identified subscriber, the e-mail message indicating the reception of the mail item. The image file may be forwarded to the recipient as an e-mail attachment or the recipient may be provided with an HTML link to a repository holding the image files.

US 2010/0057486 A1 (H. Y. Kim et al.) relates to a linkage system and a linkage method that links an e-mail address with a postal address. This allows for delivering a postal item to a real address of a customer, even though the e-mail address is entered in the postal item.

In contrast, DE 10 2007 043 765 A1 (Deutsche Telekom AG) relates to a method and system for sending e-mails to postal addresses. Information allowing the assignment of e-mail addresses to postal addresses is stored in a database, whereas the e-mail addresses are provided by the respective user. The central server of the system receives digital messages directed to postal addresses, and the e-mail addresses corresponding to these postal addresses are determined accessing the database.

These known systems require that the recipient registers himself or herself in a database of the service provider, providing postal address and e-mail address information. The registration process may be cumbersome and prone to misuse by third parties, as they could try to divert physical mail to their own e-mail addresses.

WO 01/13576 A2 (Postoffice.com, Inc.) discloses an electronic communication system that self-authenticates the identity of senders and recipients, supports multiple modes of addressing, and provides for automatic prioritization of received communications. Electronic communications may be sent to a recipient simply by including the recipient's postal address at the head of the body of a message sent by ordinary e-mail, or in fields specifically provided in a browser interface. The communication is delivered to a previously established master e-mail address. At the domain, any or all available postal addresses have been assigned a digital mailbox. If a recipient has not activated his or her digital mailbox, the sender's electronic communication is printed out and combined with an authentication code assigned to the recipient; the printout is then sent to the recipient by using the postal service. The recipient may register his or her digital mailbox by providing the code back to the system which hosts the digital mailbox. In order to save postage and gaining customers through a wider distribution, the code may be printed on some other sender's physical mail. Furthermore, senders can specify per-message authentication, so that in order to read messages, the recipient must supply additional information, specific to the respective sender. This can be one-time for the specific sender-receiver combination, periodic or for each received message individually.

This existing system provides limited options to the recipient. Basically, the recipient can choose to stay with receiving the communications by post or he or she may activate the digital mailbox and receive all further communications electronically, in the digital mailbox.

### Summary of the invention

It is the object of the invention to create a a system pertaining to the technical field initially mentioned, that alleviate the aforementioned drawbacks of the prior art.

The solution of the invention is specified by the features of claim 1.

A system according to the invention for delivering mail to a recipient, comprises:
a) an incoming server for receiving mail content from a sender, including recipient address information;
b) a profile database including user profiles assigning preferred delivery methods to registered users, the delivery methods including at least physical and electronical delivery;
c) a processor accessing the profile database for determining a delivery method based on the recipient address information and the user profiles;
d) an outgoing server for preparing mail including the mail content for delivery to the recipient using the determined delivery method;
e) a generator for generating verification information;
f) a printer for printing the verification information to a mail envelope and/or the mail content of physical mail to be delivered; and
g) an interface accessible by the recipient and connected to the profile database, allowing for modification of the recipient's user profile using the verification information.

The verification information delivered to the recipient together with the physical mail allows for easy modification of the recipient's user profile. Modification may include registration of the recipient with the service. Misuse by unauthorized third parties is prevented as the verification information is needed in order to modify the delivery method or aspects of the delivery method (such as the e-mail address to be used for electronic delivery).

In the context of this application, the term "mail" relates to any kind of information (text, images, graphics, data etc.) that is sent from a sender to one or a plurality of recipients. Generally it includes any content that may be delivered in physical as well as in electronic form. In particular, "mail content" may be received from the sender in physical form (i. e. paper, including an envelope or not) or in electronic form, i.e. as one or a plurality of data files sent by e-mail, as part of a data stream, by means of a file transfer service etc.

The recipient address information may be part of the general content of the mail or provided in a specific location (i. e. printed on an envelope) or in a specific data field or data file received with the mail content. The recipient address information may be the postal or e-mail address of a single recipient or an indication that allows for assigning such addresses of a single or a plurality of recipients. As an example, such an indication may relate to a certain group of recipients, the addresses of which being stored in a database of the service provider.

As long as there is no user profile in the profile database a default delivery method will be used. This method may be fixed for every case (i. e. physical) or depend from the kind of reception of the mail content from the sender (e. g. mail content received in physical form is delivered in physical form, and mail content received in electronic form is delivered in electronic form). It may as well depend from other criteria such as e. g. the recipient's address (e. g. delivery in physical form to addresses in the home country and delivery in electronic form to foreign addresses).

The method of delivery is not limited to just physical (i. e. postal mail) or electronic (i. e. e-mail) delivery but physical as well as electronic delivery may take place in different forms. As an example, physical delivery may be postal delivery with standard, registered (with or without reply advice) or express mail, it may be delivery by courier etc. For electronic delivery, services are available that provide encrypted e-mail or e-mail with return receipt, furthermore the mail content may be made available to the recipient in a repository. In certain embodiments, the invention may provide the recipient the choice between different types of physical or electronic delivery, respectively. In other embodiments, the recipient is free to choose between physical and electronic delivery, whereas the specific type of delivery is determined by the sender and/or the service provider.

The verification information may be printed onto an existing physical mailpiece, e. g. onto the envelope or front page of a physical mailpiece supplied by the sender or a physical mailpiece created previously by the service provider based on electronic information received from the sender, or it may be printed in the context of the service provider creating the physical mailpiece based on electronic information received from the sender. In the latter cases the verification information may be located on an envelope and/or on a document within the envelope or the physical mailpiece.

It is to be noted that it is not required that the verification information is directly printed onto the envelope or mail content but it may be printed on a further item, which is subsequently added to the outgoing mail item, e. g. to an adhesive label. Furthermore, printing shall be understood to include any method of creating visual information on a material item (including stamping, embossing etc.). Further, it is not required that the visual information is visible from the beginning, but it may be hidden by other elements or only appear if illuminated by a specific light source (e. g. ultraviolet light).

The verification information fulfils two important functions: First of all, it simplifies and enables access of the recipient to a service allowing for modifying the recipient's user profile in the profile database. Furthermore, using the verification information, received by physical mail, the recipient validates his or her postal address, thus ensuring that the owner of a given e-mail address effectively lives or has its seat at the given postal address. Cross-checking further information such as postal directories or official databases this verification allows at least to a certain extent a verification of the identity of the recipient. Therefore, the verification information may be used to authenticate the true postal address of the recipient and/or to activate a recipient's user account and/or to activate a service offered by the service provider (such as electronic delivery of mail originating from a certain sender or group of senders).

It is to be noted that methods for the validation of a customer's identity by sending a form to the customer's postal address are known as such, cf. e. g. US 7,711,950 (US Postal Service). However, the invention stands out as it provides a particularly simple and versatile solution adapted to services allowing for delivering mail in physical as well as electronic form.

Storing the preferred delivery method in user profiles of a profile database of the service provider effectively hides the recipient's preferences from the senders, thus ensuring privacy and protecting the corresponding information from misuse by the senders. Accordingly, the willingness of the recipients to switch to register with the service provider in order to switch to electronic delivery is increased.

The components of the system according to the invention such as the incoming server, the profile database, the processor, the outgoing server, the generator or the interface accessible by the recipient may be embodied using a plurality of hardware components as well as using a single component such as a server. If there is a plurality of components they may be located at the same site or they may be distributed and connected by suitable (secure or protected) connections such as over a network. A (central) profile database may cooperate with a plurality of incoming and/or outgoing servers. Similarly, if several of the components are embodied in a single piece of hardware (such as a server computer) the functions of these components may be effected within a single server environment or using a plurality of virtualized servers. Therefore, the claim language is to be understood as relating to specific functions carried out by suitable hardware components, without limiting the actual implementation to a certain number of hardware components.

The profile database may be queried by direct access or by means of an intermediate agent. Obtaining the delivery method and further information (such as an e-mail address for electronic delivery) may be preceded by checking the database for the existence of an entry relating to the recipient and/or sender. Furthermore, if required this preceding check may be based on de-identified data.

The system according to the invention is usually operated by a service provider. This may be a dedicated service provider, however advantageously the service provider is the postal service or closely linked to the postal service as this obviates the need for special addressing or posting of the mail by the sender and allows for seamless processing. Furthermore, the postal service will have access to reliable databases of postal addresses which improves the quality of the verification of the postal address of recipients.

The inventive system is particularly suitable for a mail dispatch service that accepts batch jobs including the information relating to a large number of (identical or similar) mailings (invoices, sales letters, etc.) as it allows for recipient specific delivery without generating additional expense at the sender.

In some of the preferred embodiments the method further comprises the step of scanning received mail content if the received mail content is in physical form. Accordingly, a corresponding embodiment of the inventive system comprises a scanner for scanning received physical mail. It is to be noted that scanning is meant to include any method of gathering visual information from a physical object, in particular any techniques for digital imaging (still and motion); accordingly the term "scanner" is meant to encompass any device capable of gathering visual information from a physical object. This allows for delivering mail received from the sender in physical form or a part thereof (e. g. the front side of the envelope) to the recipient in electronic form. Alternatively or as a
further option for the recipient, the scanned documents or a part thereof may be made available to the recipient in a repository.

The scanning step may be effected after the determination of the delivery method, thus allowing for selectively scanning only those documents that are to be delivered in electronic form. Alternatively, the scanning step is effected for every mail content received from the sender in physical form. In even further embodiments, part of the mail content (e. g. the front side of the envelope) is scanned in any case, prior to the determination, whereas another part of the mail content (e. g. the documents contained in the envelope) are only scanned after the determination and only in cases where the delivery method is electronic.

Further embodiments where all mail content is always received in electronic form feature no scanning step or scanner.

In some of the preferred embodiments the method comprises the step of printing received mail content if the received mail content is in electronical form. Accordingly, a corresponding embodiment of the inventive system comprises a printer for printing received mail content. This allows for delivering mail received from the sender in electronic form or a part thereof to the recipient in physical form.

Preferably, the received mail content is printed only after the determination of the delivery method, thus only in cases where the delivery is to be effected in physical form.

Further embodiments where all mail content is always received in physical form feature no printing step or printer.

Preferably, the verification information is requested and supplied by a web interface service allowing for accessing the database, i. e. the interface of the system is a web interface service. This allows for easy access by the recipient.

Alternatively, other interfaces are possible such as a (touch tone) telephone interface, registration by e-mail or a short messaging service. All these alternatives allow for supplying the verification information to the interface.

The verification information is sender specific, i. e. the generator generates sender specific verification information. Accordingly, when the recipient accesses the interface for modifying his or her user profile the service provider is able to determine the sender of the mail received by the recipient, based on the verification information, without further user input.

The association with the sender may be effected in different ways: First of all, the verification information may contain data that represents the sender such as the name of the sender or an identifier assigned to the sender by the service provider, Secondly, every verification information may be unique, relating to only one physical mailpiece. Using a database relating every mailpiece to the corresponding sender allows for determining the sender based on the verification information of a certain mailpiece. The data within the verification information may be in clear format or coded or encrypted, respectively.

Correspondingly, delivery preferences for this particular sender or a group of senders fulfilling certain criteria may be modified without the need of the recipient having to enter sender information. Therefore, the recipient may choose to modify his or her user profile with respect to the delivery method to be used for the specific sender or for a plurality of senders. Accordingly, the interface provides a control element for the recipient to modify the recipient's user profile in the profile database with respect to the delivery method to be used for the specific sender or for a plurality of senders. Advantageously, the user has the choice of effecting a modification for the sender of the mailpiece provided with the verification information (which may be the default choice), for a group of senders the aforementioned sender belongs to, for another sender which may be entered by the user or chosen from a list, for another group of senders which may be chosen by the user, or for any sender.

In some embodiments, the verification information is supplemented only if the recipient is not registered in the profile database, i. e. the generator is controlled to supplement a verification information only if the recipient is not registered in the profile database. Therefore, the verification information enables the recipient to register with the service provider in order to receive mail in electronic form as well as validating his or her postal address. As soon as the registration is effected, further mailpieces will not be provided with the verification information anymore.

As soon as a recipient is registered with the profile database and has validated his or her postal address the recipient is allowed to receive mail addressed to his or her postal address in electronic form. Depending on the service provider, it may be possible for the recipient to choose to receive any kind of mail in electronic form, i. e. it will not be necessary to supply validation information for any sender.

In other embodiments, the verification information is supplemented if a preferred delivery method relating to the sender of the mail content is not indicated in the recipient's user profile, i. e. the generator is controlled to supplement a verification information if a preferred delivery method relating to the actual sender of the mail is not indicated in the recipient's user profile. This allows for modifying the default preferred delivery method for a new sender. As soon as the preferred delivery method for a given sender has been chosen future mailpieces from that sender will not be provided with the verification information anymore.

In alternative embodiments, the verification information will always be supplemented when mail is delivered in physical form.

Preferably, the verification information is a verification code, i. e. the generator generates a verification code. In the present context, "code" relates to a representation of data that cannot be easily generated by third parties and the content of which (if any) cannot be easily discerned by third parties. In the most simple case, the code is a unique identification number and all information relating to that identification number (such as recipient, sender etc.) is stored in a database of the service provider. In order to prevent abuse, it is preferred to use a number space which is much larger than the number of mailpieces to be identified. This makes it difficult to access (random) user profiles by number guessing. In order to reduce the length of the verification code, it is useful to employ not only numeric but alphanumeric characters (e. g. by using hexadecimal numbers or expressions composed of the full set of 10 numeric characters and 26 letters). Instead of using a number the code may be generated in other ways: An encrypted version of information relating to the sender and/or the recipient as well as to further information such as a date and/or time may be used, or a hash value of such information is employed.

Preferably, the codes are only valid within a certain time interval, e. g. several days up to a few weeks. This further reduces the risk of misuse.

Preferably, an assignment between the verification information and the recipient is stored in a verification information database. This obviates the need to encode the recipient information within the verification information. The verification information database may be integrated within the profile database or it may be a separate database running in the same database system or another database system. Preferably, the postal address of the recipient is stored in the verification information database as this allows for validating the postal address of the recipient.

Preferably, an assignment between the verification information and the sender is stored in the verification information database. This allows for easily offering the modification of sender specific delivery preferences and obviates the need to encode the sender information within the verification information.

A given user profile stored in the profile database may assign preferred delivery methods to different types of content of the received mail content. As an example, content that is identified as being an invoice may be delivered in physical form whereas all other content is delivered in electronic form. Numerous other distinctions are conceivable.

The type of content may be indicated by the sender (especially in the case of mail information received from the sender in electronic form) and/or it may be assigned by the system of the service provider (e. g. based on information obtained from scanning mail information received in physical form).

A given user profile stored in the profile database may assign preferred delivery methods to different formats of the received mail content. As an example, content received in electronic form may always be delivered in electronic form, whereas the delivery method for content received in physical form is chosen based on the sender. Again, numerous other distinctions are conceivable.

Besides electronic or physical form of the incoming mail, other criteria may be used, such as the type of delivery of the received physical mail (such as standard mail, registered mail, express mail etc.) or the file format of the electronic mail or attachments respectively (such as ZIP archive, PDF document, TIFF image etc.).

As mentioned before, a given user profile stored in the profile database may assign preferred delivery methods to different senders.

The different criteria (such as content, format, sender) may be combined in order to determine the preferred delivery method.

Other advantageous embodiments and combinations of features come out from the detailed description below and the totality of the claims.

### Brief description of the drawings

The drawings used to explain the embodiments show:
- Fig. 1: A schematic representation of a system according to the invention;
- Fig. 2: a flowchart of the processing of mail by the inventive system;
- Fig. 3: a flowchart of the post address verification and modification of the user profile;
- Fig. 4: the user interface for post address verification and choice of method of delivery; and
- Fig. 5: a schematic representation of the data model of the user profile database.

In the figures, the same components are given the same reference symbols.

### Preferred embodiments

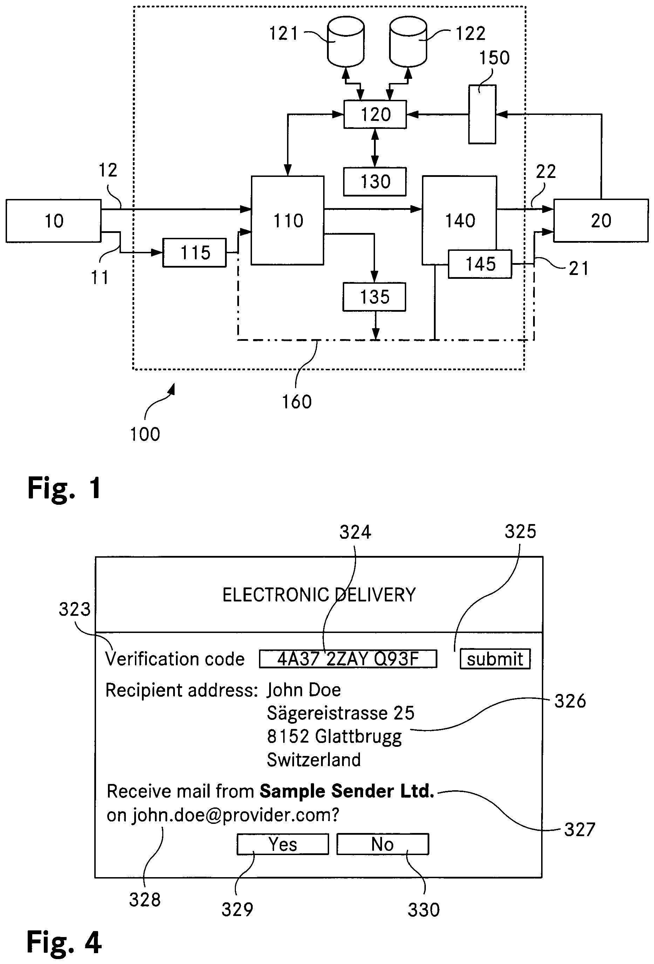

Figure 1 is a schematic representation of a system according to the invention. The sender 10 sends mail to a recipient 20, whereas the mail is processed by a service provider employing the system 100.

The sender is free to send mail in physical form over a suitable channel 11 such as the postal service, pick-up or hand-over or mail in electronic form over another suitable channel 12 such as SMTP e-mail, webmail, file upload etc. Mail in physical form will be forwarded to a scanner 115 to scan at least part of the mail such as the front side of an envelope or the cover page of a document. After scanning, the physical mail will be forwarded through the process on physical route 160.

The result of the scanning process (in image or processed form) as well as mail in electronic form will be received by incoming server 110. Based on that data the incoming server extracts information relating to the mail content and format, such as the sender address and the recipient address and adds that information to the metadata of the incoming mail (if not already present). The addresses may be complemented and corrected, e. g. by consulting an address database of the service provider or a third party. It is preferred that the same address database is used for refining the recipient address as well as for physical delivery of mail as this maximizes the quality of identification.

The aforementioned information allows for retrieving a delivery method from a profile database 121. For that purpose, the incoming server 110 forwards the information (in particular the identification of the sender and the address of the recipient) to a processor 120 which has access to profile database 121. The possible results of a request to the profile database 121 based on the sender and recipient address are as follows:
A. A user profile of the recipient is not comprised in the database.
B. A user profile of the recipient is comprised in the database. The recipient's address has not yet been validated.
C. A user profile of the recipient is comprised in the database. The recipient's address has been validated. There is no preferred method of delivery for mail coming from the given sender.
D. A user profile of the recipient is comprised in the database. The recipient's address has been validated. The user profile contains information about the preferred method of delivery for mail coming from the sender.

The delivery method for the actual mail received by the incoming server 110 is set based on the result. In case A, a new user profile will be generated in the database and the mail will be sent according to the method chosen by the sender, i. e. physical mail is delivered in physical form whereas electronic mail is delivered in electronic form. Alternatively, the sender is enabled to explicitly choose a certain delivery method in cases where the recipient has not indicated a preferred method for mail coming from that specific sender. In cases B and C, a default method set by the recipient will apply. If no default method is set, the method will be determined as in case A. In case D the method of delivery will be set to the preferred method stored in the user profile.

The processor 120 further communicates with a generator 130 which generates a verification code if no such code is stored in the user profile of the recipient or if a new code is needed. The verification code is part of the processor's response to the incoming server 110 together with the method of delivery. The response further comprises the e-mail address of the recipient and the information about whether the recipient's postal address has been validated.

The result of the determination, including the verification code, will be added to the metadata of the received mail content. The verification code is used only if the result matches case A, B or C and if the mail is to be delivered in physical form. In case of a physical mailpiece, the verification code will be printed onto the physical mailpiece or a label to be put onto the physical mailpiece by a printer 135. Usually, the verification code will be supplemented with indications about its purpose and instructions about how to use it, e. g. "You can choose to receive future letters of this sender in digital form. For registration, please go to www.serviceprovider.com and use the key 4A37 2ZAY Q93F." Misuse of the verification code may be prevented by solutions known as such, especially by providing the indication of the verification code in a tamper-proof manner (e. g. printing the verification code on the adhesive side of a removable label or behind a scratch surface). Furthermore, the verification code and an assignment to the corresponding sender and recipient addresses are stored in a verification information database 122 by the processor 120.

In case of electronic documents, the verification code will be added to the mail content, e. g. inserted into the documents to be delivered in a predetermined position. This is done by the outgoing server 140 which is connected to another printer 145 for printing the outgoing mail if the documents are present in electronic form and if the delivery method is physical. Again, the verification code will usually be complemented with an indication about its purpose and instructions about how to use it. Finally, the mail is delivered to the recipient 20 in physical form over a suitable channel 21 such as the postal service, pick-up or hand-over or mailed in electronic form over another suitable channel 22 such as SMTP e-mail, webmail, etc., depending on the determined method of delivery. Mail that has been received from the sender in physical form but that is exclusively delivered in electronic form will be discarded after a certain time interval.

Using the obtained verification code, the recipient 20 may access the profile database 121. For that purpose, the recipient uses a web-accessible interface 150 connected to processor 120. The recipient 20 enters the verification code. Accessing the verification information database 122 , the processor 120 obtains information about the sender and the recipient of the mailing provided with the entered verification code. The process of registration and verification is described in more detail below.

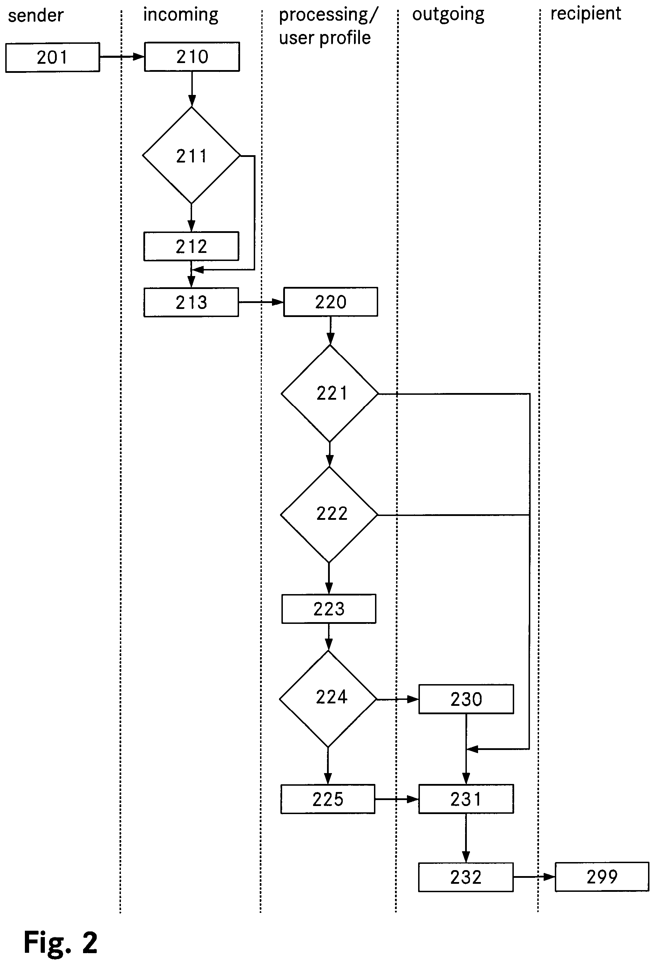

Figure 2 is a flowchart of the processing of mail by the inventive system as shown in Figure 1 and described above. The sender sends mail to a recipient in physical or electronic form (step 201). It is also possible to receive components of certain mailings in physical form whereas other components are received in electronic form (e. g. metadata). The mail is received at the service provider (step 210). Next, it is determined whether the mail received is in physical form (step 211). If yes, at least part of the mail (front side of the envelope, cover page) is scanned (step 212). This step is left out if the mail has been received in electronic form. Next, the addresses of the sender and of the recipient as well as further metadata needed for further processing the mail are extracted from the scanned data or the electronic mail (step 213). Using this data a preferred method of delivery (physical, electronical, both, none etc.) is determined by accessing a profile database (step 220). For that purpose a request is sent to the processor and a response will be received including inter alia the information about whether the recipient's address has been already verified.

If the mail will be delivered in electronic form (step 221) or if the user profile of the recipient already contains specific information about the preferred delivery method for mail sent by the specific sender, the mail will be prepared for delivery, using the preferred method of delivery (step 231). If the preferred delivery for the given sender is "stop" the mail will not be further processed, except in cases where further processing is mandatory such as in the case of registered mail.

If the mail will be delivered in electronic form (step 221) and if the user profile of the recipient does not already contain specific information about the preferred delivery method for mail sent by the specific sender, a verification code will be generated (step 223). If the mail has been received already in physical form (step 224) the verification code will be printed onto the physical mailpiece (step 225). If the mail has been received in electronic form (step 224) the mail content to be printed will be supplemented by the verification code (step 230). After that, the mail will be prepared for delivery, using the preferred method of delivery (step 231), and delivered or made accessible to the recipient in the preferred method of delivery (step 232). Preparing the mail may include printing content that is provided in electronic form only, e. g. in a printcenter. Furthermore, preparing the mail may include supplementing the mail with attachments or enclosures. Physical mail will be delivered by a usual dispatch service (such as the postal service), electronic mail will be delivered e. g. using a mailserver or made available in a repository. Finally, the recipient will receive the mail (step 299).

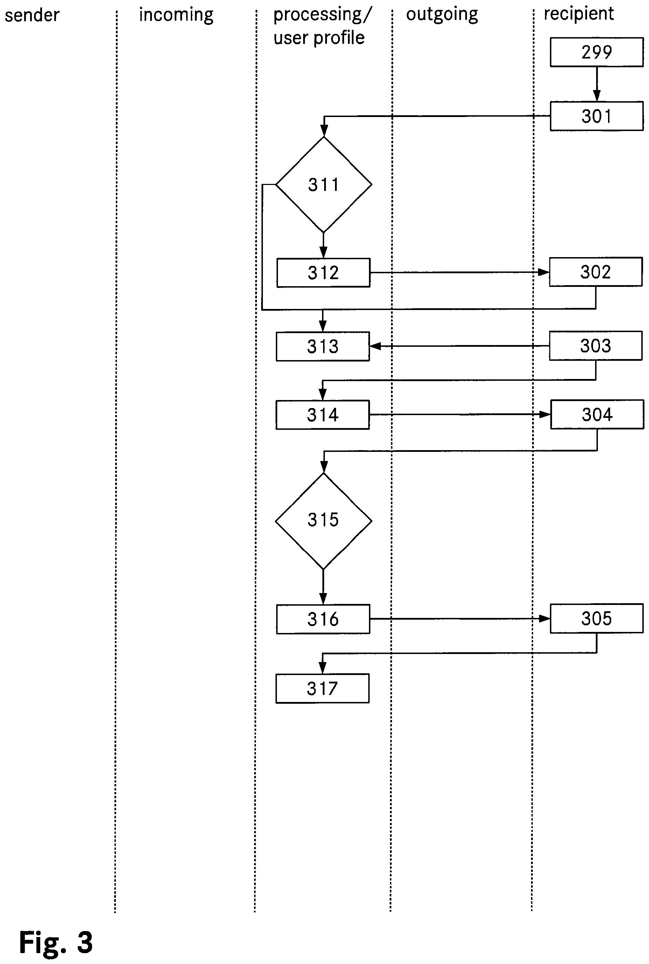

Figure 3 is a flowchart of the post address verification and modification of the user profile. After receipt of the mail and the verification code (step 299), the recipient contacts the web interface, e. g. by entering the corresponding html address in a web browser (step 301). The html address may be part of an indication printed to a physical mailpiece or supplemented to the mail content, the indication further comprising the verification code. The web service will check with the profile database (or a separate user database) whether the user has already registered with the service in an earlier session (step 311). It is to be noted that access to the service may be granted to users that are provided with an account of a defined group of accounts offered by the service provider or even third party providers; it is not required that a specific account is set up that is only valid for accessing the present service.

If the recipient has not registered before, the registration dialog will be presented to the recipient (step 312) and he or she will supply the required information (step 302). Usually, the registration will include e-mail address verification in order to make sure that messages of the system are sent to the registering user. At the same time, this ensures that mail delivered in electronic form cannot be sent to third parties' e-mail addresses without the third parties' explicit consent. Next, or if the user was already registered, the login dialog will be shown (step 313) allowing the user to login to his or her account (step 303).

Next, the recipient is presented with the user interface for post address verification and choice of method of delivery as shown in Figure 4. First, only the first line, i. e. the indication 323 ("Verification code"), the field 324 for entry of the verification code and the submit button 325 will be shown to the user (step 314). As soon as the verification code has been entered by the recipient and confirmed with the submit button 325, the verification code is submitted to the processor. The code is checked against the verification information database (step 315).

If correct, the user interface additionally shows the recipient's address 326 stored in the profile database or the user verification information database, if applicable, as well as the name of the sender 327 and an address for the delivery of electronic mail to the recipient (such as the recipient's e-mail address 328 from the user profile) (step 316). The recipient may choose the preferred method of delivery by pressing a corresponding push button (step 305), in the shown example there is a "yes" push button 329 for switching to electronic delivery as well as "no" push button 330 for sticking with physical delivery. Finally, the user profile database is modified according to the entry of the recipient (step 317).

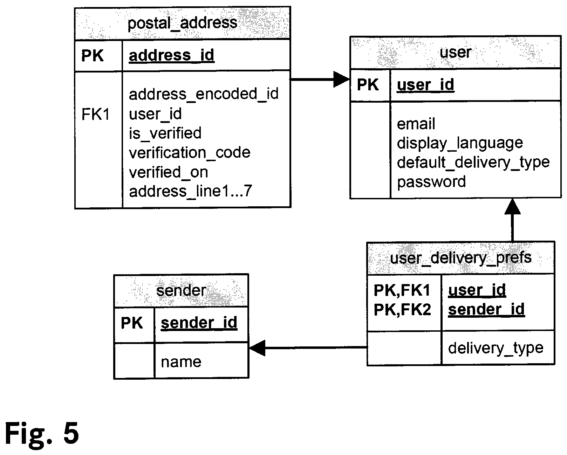

The Figure 5 is a schematic representation of the data model of the user profile database. It shows the main data objects as well as their primary relations. First of all, the user profile database contains postal addresses of recipients, the corresponding object postal-address includes the following attributes:

| **attribute** | **content** | **example** |
|---|---|---|
| address_id (primary key) | a unique identification number | 1023123123 |
| address_encoded_id | a unique representation of a recipient's address | John Doe Sägereistrasse 25 8152 Glattbrugg CH |
| user_id | the id of a user profile (user name, e-mail address) | john.doe@provider.com |
| is_verified | has the recipient's address already been validated by entering a verification code | TRUE, FALSE |
| verification_code | a unique code relating to a validation of a postal address | 4A372ZAYQ93F |
| verified_on | date and time of (last) verification | 2011-02-21 11:27Z |

Furthermore, the user profile database contains further information about the registered users, the corresponding object user includes the following attributes:

| **attribute** | **content** | **example** |
|---|---|---|
| user_id (primary key) | the id of a user profile (user name, e-mail address) | john.doe@provider.com |
| email | the email address of the user (does not need to coincide with the user name) | john.doe@provider.com |
| display_language | the display language | eng |
| default_deliven_type | the method of delivery if there is no preferred method for a given sender | 1=physical, 2=electronic, 3=stop |
| password | an encrypted / hashed password | 88dd8f282721af2c704e238e7f338c41 |

The preferred method of delivery may be set for any combination of sender and recipient. The corresponding object user_delivery_prefs includes the following attributes:

| **attribute** | **content** | **example** |
|---|---|---|
| user_id (primary key, foreign key 1) | the id of a user profile (user name, e-mail address) | john.doe@provider.com |
| sender_id (primary key, foreign key 2) | a unique identification of the sender | 893531 |
| delivery_type | the user's preferred method of delivery for mail sent by the sender | 1=physical, 2=electronic, 3=stop |

Further, the user profile database stores information about the senders, the corresponding object sender includes the following attributes:

| **attribute** | **content** | **example** |
|---|---|---|
| sender_id (primary key) | a unique identification of the sender | 893531 |
| name | the name of the sender | Sample Sender Ltd. |

Using the information stored in the "verified_on" field of the user profile the system provider may periodically verify the postal address by supplementing mail sent to a given recipient with a new verification code.

The web interface allows for managing the user's profile in various ways. As soon as the user has logged in he or she may
A. have the postal addresses displayed assigned to the user, their verification status, as well as for every address a list of senders that have sent mail to the given address;
B. have the senders displayed and the preferred methods of delivery assigned to every sender;
C. modify the preferred method of delivery for any valid combination of sender and recipient address; and
D. modify the default method of delivery for new senders or senders without a specific indication within the profile database.

The communication between the recipient and the web service may be transmitted over a secure connection (such as a TLS internet connection).

The invention is not restricted to the described embodiment. A number of modifications are possible. As an example, the documents supplied by the sender in electronic form and to be delivered to the recipient in physical form need not be printed by the service provider or in a print center of the service provider but they may also be printed by the sender or in a print center chosen by the sender. For that purpose, the sender will be provided with the required information (indication of the mailings that need to be printed, verification codes). After printing, the sender or the sender's print center will supply the printed documents to the service provider which will forward them directly to the outgoing server for delivery in physical form.

Instead of the verification codes shown above two-part verification codes may be used which are composed of a first part relating to the sender (e. g. a sender ID) and a second part relating to the recipient address. Even three-part verification codes may be employed having a third part relating to the actual mailpiece. Alternatively, the recipient and mailpiece information is combined into one part.

In summary, it is to be noted that the invention creates a system that simplify the access of a recipient to a user profile and that allow for easy validation of postal addresses.

## Claims

1. A system for delivering mail to a recipient (20), comprising:
a) an incoming server (110) for receiving mail content from a sender (10), including recipient address information;
b) a profile database (121) including user profiles assigning preferred delivery methods to registered users, the delivery methods including at least physical and electronical delivery;
c) a processor (120) accessing the profile database (121) for determining a delivery method based on the recipient address information and the user profiles;
d) an outgoing server (140) for preparing mail including the mail content for delivery to the recipient (20) using the determined delivery method;
e) a generator (130) for generating verification information, wherein the verification information is sender specific;
f) a printer (135, 145) for printing the verification information to a mail envelope and/or the mail content of physical mail to be delivered;
g) an interface (150) accessible by the recipient (20) and connected to the profile database (121), allowing for modification of the recipient's user profile using the verification information, wherein the interface (150) provides a control element for the recipient (20) to choose to modify the recipient's user profile in the profile database (121) with respect to the delivery method to be used for the specific sender (10) or for a plurality of senders.

2. The system as recited in claim 1, further comprising a scanner (115) for scanning received mail content if the received mail content is in physical form.

3. The system as recited in claim 1 or 2, comprising a printer (145) for printing received mail content if the received mail content is in electronical form.

4. The system as recited in one of claims 1 to 3, whereas the interface (150) is a web interface service.

5. The system as recited in one of claims 1 to 4, whereas the generator (130) is controlled to supplement a verification information only if the recipient (20) is not registered in the profile database (121).

6. The system as recited in one of claims 1 to 5, whereas the generator (130) is controlled to supplement a verification information if a preferred delivery method relating to the sender (10) of the mail is not indicated in the recipient's user profile.

7. The system as recited in one of claims 1 to 6, whereas the generator (130) generates a verification code.

8. The system as recited in one of claims 1 to 7, comprising a verification information database (122) for storing an assignment between the verification information and the recipient (20).

9. The system as recited in claim 8, whereas an assignment between the verification information and the sender (10) is stored in the verification information database (122).

10. The system as recited in one of claims 1 to 9, whereas the profile database (121) stores user profiles assigning preferred delivery methods to different types of content of the received mail content.

11. The system as recited in one of claims 1 to 10, whereas the profile database (121) stores user profiles assigning preferred delivery methods to different formats of the received mail content.

12. The system as recited in one of claims 1 to 11, whereas the profile database (121) stores user profiles assigning preferred delivery methods to different senders.

## Patentansprüche

1. System zum Liefern von Post an einen Empfänger (20), umfassend:
a) einen Eingangsserver (110) zum Empfangen von Postinhalt, welcher Empfängeradressinformationen beinhaltet, von einem Absender (10);
b) eine Profildatenbank (121), die Benutzerprofile beinhaltet, welche bevorzugte Lieferarten an registrierte Benutzer zuweist, wobei die Lieferarten mindestens eine physische und eine elektronische Lieferung beinhalten;
c) einen Prozessor (120), der zum Bestimmen einer Lieferart auf Basis der Empfängeradressinformationen und der Benutzerprofile auf die Profildatenbank (121) zugreift;
d) einen Ausgangsserver (140) zum Vorbereiten von Post, die den Postinhalt beinhaltet, zur Lieferung an den Empfänger (20) unter Verwendung der bestimmten Lieferart;
e) einen Erzeuger (130) zum Erzeugen von Verifizierungsinformationen, wobei die Verifizierungsinformationen absenderspezifisch sind;
f) einen Drucker (135, 145) zum Drucken der Verifizierungsinformationen auf einen Postumschlag und/oder des Postinhalts von physischer Post, die zu liefern ist;
g) eine Schnittstelle (150), auf die der Empfänger (20) zugreifen kann und die mit der Profildatenbank (121) verbunden ist und die das Modifizieren des Benutzerprofils durch den Empfänger unter Verwendung der Verifizierungsinformationen erlaubt, wobei die Schnittstelle (150) ein Steuerelement bereitstellt, mit dem der Empfänger (20) das Modifizieren des Benutzerprofils des Empfängers in der Profildatenbank (121) in Bezug auf die Lieferart, das für den spezifischen Absender (10) oder für eine Vielzahl von Absendern zu verwenden ist, auswählen kann.

2. System nach Anspruch 1, welches ferner einen Scanner (115) zum Scannen von empfangenem Postinhalt umfasst, wenn der empfangene Postinhalt in physischer Form ist.

3. System nach Anspruch 1 oder 2, welches einen Drucker (145) zum Drucken von empfangenem Postinhalt umfasst, wenn der empfangene Postinhalt in elektronische Form ist.

4. System nach einem der Ansprüche 1 bis 3, wobei die Schnittstelle (150) ein Webschnittstellendienst ist.

5. System nach einem der Ansprüche 1 bis 4, wobei der Erzeuger (130) gesteuert wird, Verifizierungsinformationen nur erzeugen, wenn der Empfänger (20) nicht in der Profildatenbank (121) registriert ist.

6. System nach einem der Ansprüche 1 bis 5, wobei der Erzeuger (130) gesteuert wird, Verifizierungsinformationen zu erzeugen, wenn kein bevorzugtes Lieferverfahren, das den Absender (10) der Post betrifft, im Benutzerprofil des Empfängers angegeben ist.

7. System nach einem der Ansprüche 1 bis 6, wobei der Erzeuger (130) einen Verifizierungscode erzeugt.

8. System nach einem der Ansprüche 1 bis 7, das eine Verifizierungsinformationsdatenbank (122) zum Speichern einer Zuweisung zwischen den Verifizierungsinformationen und dem Empfänger (20) umfasst.

9. System nach Anspruch 8, wobei eine Zuweisung zwischen den Verifizierungsinformationen und dem Absender (10) in der Verifizierungsinformationsdatenbank (122) gespeichert ist.

10. System nach einem der Ansprüche 1 bis 9, wobei die Profildatenbank (121) Benutzerprofile speichert, die verschiedenen Typen von Inhalt des empfangenen Postinhalts bevorzugte Lieferarten zuweisen.

11. System nach einem der Ansprüche 1 bis 10, wobei die Profildatenbank (121) Benutzerprofile speichert, die verschiedenen Formaten des empfangenen Postinhalts bevorzugte Lieferarten zuweisen.

12. System nach einem der Ansprüche 1 bis 11, wobei die Profildatenbank (121) Benutzerprofile speichert, die verschiedenen Absendern bevorzugte Lieferarten zuweisen.

## Revendications

1. Système de livraison de courrier à un destinataire (20), comprenant :
a) un serveur entrant (110) pour recevoir du contenu de courrier d'un expéditeur (10), comprenant des informations d'adresse de destinataire ;
b) une base de données de profils (121) comprenant des profils d'utilisateurs qui assignent des procédés de livraison préférés aux utilisateurs enregistrés, les procédés de livraison comprenant au moins la livraison physique et électronique ;
c) un processeur (120) accédant à la base de données de profils (121) pour déterminer un procédé de livraison sur la base des informations d'adresse de destinataire et des profils d'utilisateur ;
d) un serveur sortant (140) pour la préparation de courrier, comprenant le contenu du courrier à livrer au destinataire (20) en utilisant le procédé de livraison déterminé ;
e) un générateur (130) pour générer des informations de vérification, les informations de vérification étant spécifiques à l'expéditeur ;
f) une imprimante (135, 145) pour imprimer les informations de vérification sur une enveloppe de courrier et/ou le contenu du courrier physique à livrer ;
g) une interface (150) accessible par le destinataire (20) et connectée à la base de données de profils (121), permettant la modification du profil d'utilisateur du destinataire en utilisant les informations de vérification, l'interface (150) fournissant un élément de commande permettant au destinataire (20) de choisir de modifier le profil d'utilisateur du destinataire dans la base de données de profils (121) par rapport au procédé de livraison devant être utilisé pour l'expéditeur spécifique (10) ou pour une pluralité d'expéditeurs.

2. Système selon la revendication 1, comprenant en outre un scanneur (115) pour scanner le contenu du courrier reçu si le contenu du courrier reçu est sous forme physique.

3. Système selon la revendication 1 ou 2, comprenant une imprimante (145) pour imprimer le contenu du courrier reçu si le contenu du courrier reçu est sous forme électronique.

4. Système selon l'une des revendications 1 à 3, l'interface (150) étant un service d'interface web.

5. Système selon l'une des revendications 1 à 4, le générateur (130) étant commandé pour compléter des informations de vérification seulement si le destinataire (20) n'est pas enregistré dans la base de données de profils (121).

6. Système selon l'une des revendications 1 à 5, le générateur (130) étant commandé pour compléter des informations de vérification si un procédé de livraison préféré concernant l'expéditeur (10) du courrier n'est pas indiqué dans le profil d'utilisateur du destinataire.

7. Système selon l'une des revendications 1 à 6, le générateur (130) générant un code de vérification.

8. Système selon l'une des revendications 1 à 7, comprenant une base de données d'informations de vérification (122) pour stocker une affectation entre les informations de vérification et le destinataire (20).

9. Système selon la revendication 8, une affectation entre les informations de vérification et l'expéditeur (10) étant stockée dans la base de données des informations de vérification (122).

10. Système selon l'une des revendications 1 à 9, la base de données de profils (121) stockant les profils d'utilisateurs qui assignent des procédés de livraison préférés à différents types de contenu du contenu du courrier reçu.

11. Système selon l'une des revendications 1 à 10, la base de données de profils (121) stockant les profils d'utilisateurs qui assignent des procédés de livraison préférés aux différents formats du contenu du courrier reçu.

12. Système selon l'une des revendications 1 à 11, la base de données de profils (121) stockant les profils d'utilisateurs qui assignent des procédés de livraison préférés à différents expéditeurs.
